# EUROPÄISCHE PATENTSCHRIFT

(11) **EP 3 065 964 B1**
(45) Veröffentlichungstag und Bekanntmachung des Hinweises auf die Patenterteilung: **25.07.2018**
(21) Anmeldenummer: 14793559.7
(22) Anmeldetag: 05.11.2014
(51) Int. Cl.: B60K 15/05

(54) **KLAPPENMODUL**
FLAP MODULE
MODULE DE VOLET

(30) Priorität: 07.11.2013 DE 102013222686
(43) Veröffentlichungstag der Anmeldung: 14.09.2016
(73) Patentinhaber: Volkswagen Aktiengesellschaft, 38440 Wolfsburg (DE)
(72) Erfinder: WINKLER, Bernd, 38165 Lehre (DE)
(86) Internationale Anmeldenummer: PCT/EP2014/073761
(87) Internationale Veröffentlichungsnummer: WO 2015/067631

(56) Entgegenhaltungen:
- EP-A1- 2 581 250
- EP-A1- 2 628 622
- GB-A- 2 459 369
- JP-A- 2007 153 011
- US-A1- 2009 189 410

## Beschreibung

Die Erfindung betrifft ein Klappenmodul für ein Kraftfahrzeug, mit einem in einer Karosserie des Kraftfahrzeugs einsetzbaren und wannenförmigen Muldenkörper, dem ein Betriebsmittelanschluss, der zur Zuführung und/oder Entnahme von Betriebsmitteln des Kraftfahrzeugs dient, zugeordnet oder zuordenbar ist, und mit einer verschwenkbaren Klappe zum Verschließen und Freigeben des Muldenkörpers, wobei die Klappe zweiteilig ausgebildet ist mit einem Tankdeckel und einem Trageteil, wobei im geschlossenen Zustand der Trageteil innerhalb des Muldenkörpers liegt und zwischen Deckelteil und Muldenkörper zumindest eine obere Fuge und eine untere Fuge gebildet sind.

Ferner betrifft die Erfindung ein Kraftfahrzeug mit einem entsprechenden Klappenmodul. Die US 2009/189410 A1, in der die Merkmale des Oberbegriffs von Anspruch 1 enthalten sind, offenbart ein Klappenmodul für ein Kraftfahrzeug.

Auch die JP 2007 153011 A, in der die Merkmale des Oberbegriffs von Anspruch 1 enthalten sind, offenbart ein Klappenmodul für ein Kraftfahrzeug.

Klappenmodule der eingangs genannten Art sind aus dem Stand der Technik bekannt. So offenbart beispielsweise die Offenlegungsschrift DE 10 2008 036 869 A1 ein Klappenmodul mit einem einen Betriebsmittelanschluss aufweisenden Muldenkörper und einer daran verschwenkbar gehaltenen Tankklappe, wobei die Tankklappe ein Deckelteil und ein Trageteil aufweist. Das Trageteil ist dabei gelenkig mit dem Muldenkörper verbunden und trägt das Deckelteil. Wird die Tankklappe zugeklappt, so liegt das Trageteil innerhalb des Muldenkörpers und das Deckelteil verschließt den Muldenkörper nach außen hin, wodurch der Betriebsmittelanschluss beziehungsweise Tankanschluss geschützt im Inneren des Klappenmoduls liegt.

Bei modernen Kraftfahrzeugen sind die Klappenmodule in der Regel derart ausgebildet, dass zum Öffnen des Tankdeckels dieser zunächst in das Modul hinein gedrückt werden muss, um eine Verriegelung zu lösen. Aufgrund dessen kann eine dichtende Auflage des Tankdeckels auf dem Muldenkörper über den gesamten Umfang hinweg nicht realisiert werden, da dies beispielsweise eine starke Verformung eines Dichtkörpers beim Öffnen des Tankdeckels bedingen würde. Außerdem wird eine vollständige Anlage auch vermieden, um Vereisungsprobleme zu vermeiden. In der Regel verbleibt daher zwischen dem Tankdeckel, insbesondere dem Deckelteil, und dem Muldenkörper ein umlaufender Spalt der oben, unten und an den Seiten jeweils eine Fuge zwischen Deckelteil und Trageteil bildet. Durch die jeweilige Fuge, insbesondere die obere Fuge, kann jedoch beispielsweise Regenwasser von außen in das Innere des Klappenmoduls gelangen. Dadurch kann beispielsweise Kraftstoff verunreinigt oder ein Gefahrenpotenzial bei einem elektrischen Anschluss in dem Muldenkörper, wie er beispielsweise bei Elektrofahrzeugen oder Hybridfahrzeugen vorgesehen ist, erhöht werden.

Aus der Offenlegungsschrift DE 10 2007 059 150 A1 ist es beispielsweise bekannt, im Bereich eines Schließzapfens eine Aussparung vorzusehen, an welcher Wasser ablaufen kann, um ein Eindringen von Flüssigkeit in das Innere des Muldenkörpers zu vermeiden. Diese Lösung ist jedoch nur im Bereich des Schließkörpers anwendbar und kann nicht helfen, von oben in das Klappenmodul einlaufende Flüssigkeit insgesamt von dem Muldenkörper fernzuhalten.

Der Erfindung liegt somit die Aufgabe zugrunde ein Klappenmodul zu schaffen, das auf einfache Art und Weise das Eindringen von Flüssigkeit in den Muldenkörper zumindest im Wesentlichen verhindert, wobei das Verlagern des Tankdeckels in das Innere des Muldenkörpers zum Entriegeln weiterhin möglich sein soll.

Die der Erfindung zugrundeliegende Aufgabe wird mit einem Klappenmodul mit den Merkmalen des Anspruchs 1 gelöst. Dieses hat den Vorteil, dass Flüssigkeit, die durch den Spalt zwischen Deckelteil und Muldenkörper gelangt, daran gehindert wird, in das Innere des Muldenkörpers und insbesondere zu einem Betriebsmittelanschluss zum Zuführen und/oder Entnehmen von Betriebsmitteln, vorzugsweise Tankanschluss, sei es für flüssigen oder gasförmigen Kraftstoff oder für elektrischen Strom, zu gelangen. Erfindungsgemäß ist hierzu vorgesehen, dass der Muldenkörper an seinem dem Deckelteil zugeordneten Ende wenigstens abschnittsweise eine Tropfkante aufweist, die im verschlossenen Zustand der oberen Fuge zugeordnet ist und oberhalb des Trageteils liegt, und dass das Trageteil einen Kanal bildet, der von der Tropfkante gelöste Flüssigkeit zu der unteren Fuge leitet. Die Tropfkante sorgt dafür, dass sich die Flüssigkeit von dem Muldenkörper löst und nicht an diesem entlang in das Innere strömt. Die Tropfkante und das Trageteil sind dabei im verschlossenen Zustand derart angeordnet, dass die von der Tropfkante gelöst Flüssigkeit in den Kanal des Trageteils gelangt. Dazu weist das Trageteil vorzugsweise wenigstens eine in den Kanal führende Öffnung unterhalb der Tropfkante auf. An einer anderen Seite des Klappenmoduls, vorzugsweise an einem unteren Abschnitt, mündet der Kanal im Bereich einer weiteren Fuge, insbesondere der unteren Fuge, aus dem Trageteil, so dass durch den Kanal transportierte Flüssigkeit in die untere Fuge geleitet wird, aus welcher die Flüssigkeit aus dem Klappenmodul wieder heraustreten kann. Dadurch wird die Flüssigkeit sicher an den relevanten Bestandteilen, insbesondere an dem Betriebsmittelanschluss, der vorzugsweise in dem Klappenmodul liegt, vorbei geleitet. Gleichzeitig wird die Verlagerbarkeit des Deckelteils in den Muldenkörper hinein zum Lösen einer Verriegelung weiterhin gewährleistet. Vorzugsweise ist das Klappenmodul als Tankklappenmodul - wie oben bereits erwähnt - ausgebildet, dessen Muldenkörper zur Aufnahme und/oder Halterung eines Betriebsmittelanschlusses ausgebildet ist oder einen derartigen Betriebsmittelanschluss aufweist.

Gemäß einer bevorzugten Weiterbildung der Erfindung ist vorgesehen, dass die Tropfkante aus Kunststoff, insbesondere aus einem thermoplastischen Elastomer gefertigt ist. Die aus Kunststoff gefertigte Tropfkante ist einfach und kostengünstig herstellbar und ist korrosionsbeständig. Bevorzugt erstreckt sich die Tropfkante entlang eines oberen Randabschnitts des Klappenmoduls beziehungsweise des Muldenkörpers, insbesondere entlang der gesamten oberen Fuge, und vorzugsweise auch über einen in Normal-Fahrtrichtung vorne liegenden Seitenabschnitt des Muldenkörpers beziehungsweise entlang einer vorderen Fuge, so dass Flüssigkeit, beispielsweise Regen, einerseits bei stehendem Fahrzeug sicher in den Kanal geleitet wird und andererseits auch bei fahrendem Fahrzeug sicher in den oder einen zusätzlichen Kanal geleitet werden kann.

Besonders bevorzugt ist vorgesehen, dass die Tropfkante an dem Muldenkörper angespritzt ist. Hierdurch kann ein herkömmlicher Muldenkörper verwendet und die Tropfkante auf einfache und kostengünstige Art und Weise nachgerüstet werden. Alternativ ist bevorzugt vorgesehen, dass die Tropfkante einstückig mit dem Muldenkörper ausgebildet ist. Auch ist es denkbar, die Tropfkante oder ein die Tropfkante aufweisendes Element an dem Muldenkörper festzukleben.

Gemäß einer vorteilhaften Weiterbildung der Erfindung ist vorgesehen, dass der Muldenkörper zumindest abschnittsweise einen Kragen aufweist, der von dem Deckelteil des Tankdeckels im geschlossenen Zustand überdeckt wird und die Abtropfkante aufweist. Durch das Überdecken des Kragens wird bereits eine Filterwirkung des Spalts zwischen Deckelteil und Muldenkörper bereitgestellt, die zumindest größere Schmutzpartikel von einem Eindringen in den Muldenkörper abhält. Weiterhin wird hierdurch gewährleistet, dass die Tropfkante unterhalb des Deckelteils angeordnet ist, so dass ein sicheres Zuführen der Flüssigkeit zu dem Kanal gewährleistet wird.

Vorzugsweise ist der Kanal durch einen Freiraum zwischen Trageteil und Deckelteil gebildet. Hierdurch kann der Kanal auf einfache und kostengünstige Art und Weise hergestellt werden. Insbesondere ist vorgesehen, dass am Trageteil eine randoffene Nut ausgebildet ist, die von dem Deckelteil einseitig verschlossen wird, um den Kanal zu bilden. Selbstverständlich könnte die Nut oder eine entsprechende Vertiefung auch in dem Deckelteil ausgebildet und durch das Trageteil verschlossen sein.

Gemäß einer alternativen Ausführungsform der Erfindung ist vorgesehen, dass der Kanal vollständig durch das Trageteil gebildet wird. Dadurch lässt sich der Kanal vorteilhafterweise unabhängig von dem Deckelteil gestalten. In diesem Fall weist das Trageteil einen Kanal auf, der beispielsweise als Bohrung oder Öffnung durch das Trageteil führt. Selbstverständlich können auch mehrere derartige Kanäle vorgesehen sein.

Gemäß der Erfindung ist vorgesehen, dass an dem der Abtropfkante abgewandten beziehungsweise einer anderen, insbesondere der unteren Fuge zugewandten Ende des Kanals eine weitere Abtropfkante vorgesehen ist. Die weitere Abtropfkante gewährleistet, dass die durch den Kanal geführte Flüssigkeit sicher von dem Trageteil gelöst und der weiteren Fuge zugeführt wird, aus welcher die Flüssigkeit wieder nach außen austreten kann.

Vorzugsweise ist vorgesehen, dass der Muldenkörper eine Ablauföffnung aufweist, wobei der Ablauföffnung eine selbsttätige Ventileinrichtung zum Öffnen oder Verschließen der Ablauföffnung zugeordnet ist. Die Ablauföffnung in dem Muldenkörper ermöglicht es, dass trotz aller Maßnahmen in den Muldenkörper gelangte Flüssigkeit aus dem Muldenkörper wieder herausgeführt werden kann. Das Vorsehen einer Ablauföffnung in dem Muldenkörper ist zu diesem Zwecke grundsätzlich bekannt. Durch das vorteilhafte Vorsehen der selbsttätigen Ventileinrichtung wird gewährleistet, dass die Ablauföffnung nur bei Bedarf geöffnet wird. Insbesondere ist vorgesehen, dass die Ventileinrichtung ein Eindringen von Flüssigkeit oder Schmutzpartikeln durch die Ablauföffnung in den Muldenkörper verhindert. Die Ablauföffnung ist bevorzugt mit einem Radkasten des Kraftfahrzeugs verbunden. Während der Fahrt kann ein Unterdruck in dem Muldenkörper durch den Fahrtwind erzeugt werden, so dass eine Strömung durch die Ablauföffnung in Richtung des Muldenkörpers erzeugt wird. Durch die Ventileinrichtung wird vermieden, dass diese Strömung den Muldenkörper erreicht beziehungsweise Flüssigkeit und/oder Schmutzpartikel in den Muldenkörper treibt.

Besonders bevorzugt ist die Ventileinrichtung als Flatterventil ausgebildet. Dies stellt eine besonders kostengünstige und einfache Möglichkeit dar, die Ventileinrichtung vorzusehen. Das Flatterventil weist insbesondere einen elastisch verformbaren Ventilkörper auf, der die Ablauföffnung bedeckt, und nur in eine Richtung hin, nämlich in Strömungsrichtung von dem Muldenkörper zu der Ablauföffnung hin, verformbar ist, um die Ablauföffnung freizugeben.

Das erfindungsgemäße Kraftfahrzeug mit den Merkmalen des Anspruchs 10 zeichnet sich durch das erfindungsgemäße Klappenmodul aus.

Im Folgenden soll die Erfindung anhand eines Ausführungsbeispiel näher erläutert werden. Dazu zeigen im Folgenden
- Figur 1: ein Klappenmodul in einer Schnittdarstellung,
- Figur 2: eine erste vergrößerte Detailansicht des Klappenmoduls,
- Figur 3: eine zweite vergrößerte Detailansicht des Klappenmoduls,
- Figur 4: eine vorteilhafte Weiterbildung des Klappenmoduls in einer weiteren Detailansicht und
- Figur 5: ein Kraftfahrzeug mit dem Tankklappenmodul in einer Seitenansicht.

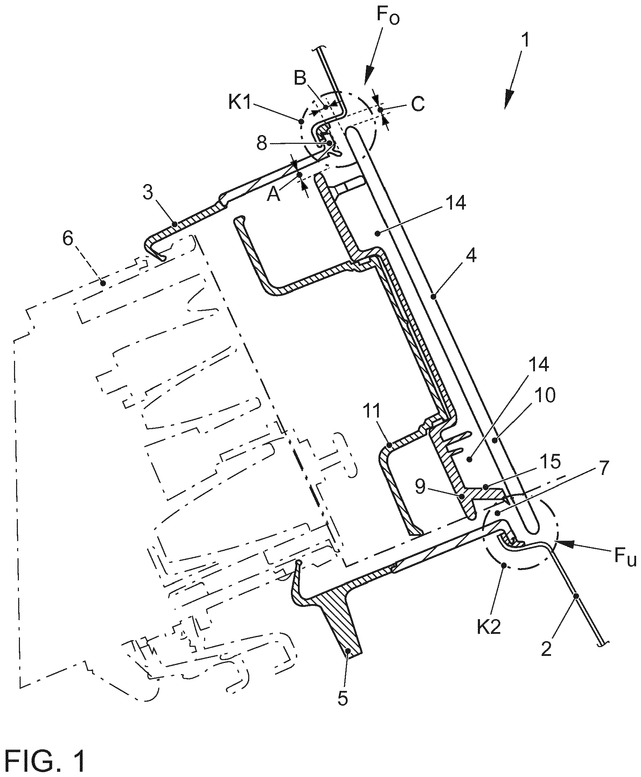

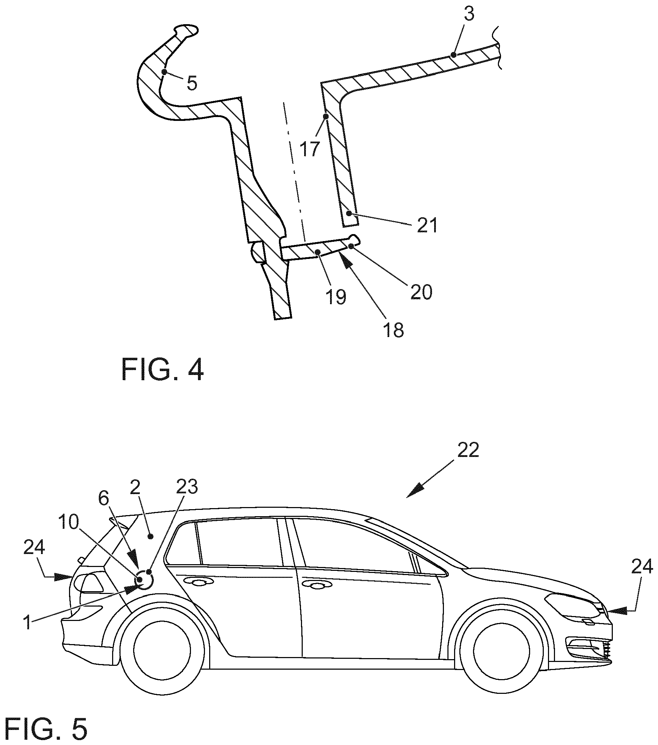

Figur 1 zeigt in einer vereinfachten Schnittdarstellung ein Klappenmodul, das als Tankklappenmodul 1 für ein in Figur 5 dargestelltes Kraftfahrzeug 22 ausgebildet ist. Das Tankklappenmodul 1 ist in eine Öffnung eines Karosserieblechs 2 einer Karosserie des Kraftfahrzeugs 22 eingesetzt und weist einen Muldenkörper 3 sowie eine als Tankklappe ausgebildete Klappe 4 auf. Der Muldenkörper 3 ist hülsenartig ausgebildet und weist in seinem Boden 5 eine Öffnung auf, durch welche ein Betriebsmittelanschluss 6, hier nur gestrichelt dargestellt, in das Innere des Muldenkörpers 3 hineinragt. Bei dem Betriebsmittelanschluss 6 kann es sich um einen elektrischen Tankanschluss, insbesondere Steckanschluss, handeln, wie er beispielsweise bei Elektrofahrzeugen vorgesehen ist, oder auch um einen Kraftstoff-Tankanschluss für flüssiges Betriebsmittel für Kraftfahrzeuge mit konventionellen Antriebssystemen, die ihre Energie beispielsweise aus Diesel- oder Benzinkraftstoff beziehen. Auf der dem Boden 5 gegenüberliegenden Seite weist der Muldenkörper 3 eine Öffnung 7 auf, die durch die Klappe 4 verschlossen wird.

Die Klappe 4 ist schwenkbeweglich an dem Muldenkörper 3 gelagert, so dass er sich aus der geschlossenen Stellung (wie dargestellt) in eine geöffnete Stellung verbringen lässt, in welcher der Betriebsmittelanschluss 6 in dem Muldenkörper 3 frei zugängig ist. Der Muldenkörper 3 weist an der Öffnung 7 einen nach außen gerichteten Kragen 8 auf, der sich über den gesamten Umfang des Muldenkörpers 3 erstreckt und rückseitig auf einem Randabschnitt des Karosserieblechs 2 aufliegt. Vorderseitig wird der Kragen 8 durch die Klappe 4 bereichsweise überdeckt. Der Randabschnitt des Karosserieblechs 2 ist dabei derart vertieft angeordnet, dass die Klappe 4 in der geschlossenen Stellung, wie dargestellt, zumindest im Wesentlichen bündig mit dem sie umgebenden Karosserieblech 2 abschließt.

Die Klappe 4 selbst ist mehrteilig ausgebildet. Zum einen weist sie ein Trageteil 9 auf, das gelenkig mit dem Muldenkörper 3 zur verschwenkbaren Lagerung der Klappe 4 verbunden ist. Zum anderen weist die Klappe 4 ein Deckelteil 10 auf, dass sich über die gesamte Öffnung 7 hinweg erstreckt und den Kragen 8 des Muldenkörpers 3 überdeckt. Das Trageteil 9 ist innen an dem Deckelteil 10 befestigt und liegt vollständig innerhalb des Muldenkörpers 3, wenn sich die Klappe 4 in der geschlossenen Stellung befindet. Damit ein einfaches Öffnen und Verschließen des Tankklappenmoduls 1 möglich ist, ist der Mindestabstand A zwischen dem Trageteil 9 und der Seitenwandung des Muldenkörpers 3 vorgesehen. Weiterhin liegt das Deckelteil in der geschlossenen Stellung in einem Abstand B zu dem Kragen 8 und an seinem Rand in einem Abstand C zu dem Karosserieblech 2. Die Abstände A, B und C gewährleisten außerdem, dass die Klappe 4 bei Temperaturen unterhalb des Gefrierpunkts nicht an dem Muldenkörper 3 vereist.

Im vorliegenden Ausführungsbeispiel ist an dem Trageteil 9 außerdem ein topfförmiges Schutzelement 11 gehalten, dass im geschlossenen Zustand den Betriebsmittelanschluss 6 bedeckt und bereichsweise aufnimmt.

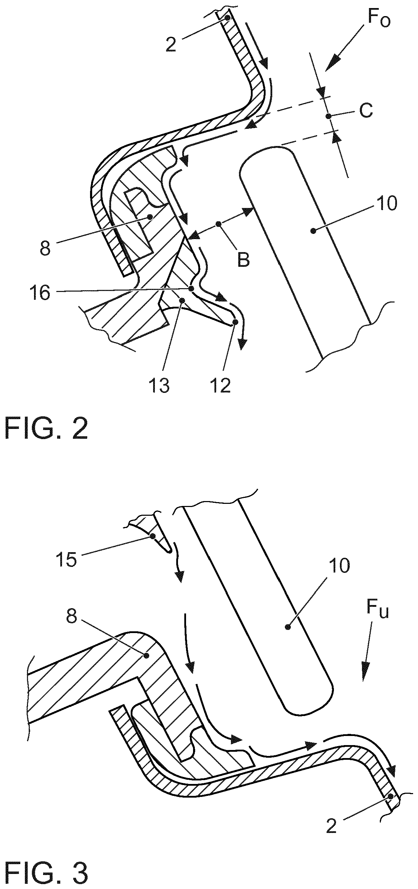

Figur 2 zeigt eine vergrößerte Detailansicht des Klappenmoduls 1 aus Figur 1 gemäß Kreis K1. Der Muldenkörper 3 weist auf Höhe des Kragens 8 eine Abtropfkante 12 auf. Die Abtropfkante 12 wird von einem Abtropfelement 13 gebildet, das an den Muldenkörper 3 angespritzt ist. Das Abtropfelement 13 ist aus einem Kunststoff, vorliegend aus einem thermoplastischen Elastomer, gefertigt. Das Abtropfelement 13 ist keilförmig ausgebildet, wobei es mit seiner Spitze in Richtung der Klappe 4 weist. An dieser Spitze ist auch die Abtropfkante 12 ausgebildet. Durch den spitzen Winkel an der Abtropfkante 12 wird erreicht, das Flüssigkeit, die durch den Spalt zwischen Deckelteil 10 und Karosserieblech 2 (Abstand C) und dem Spalt zwischen Deckelteil 10 und Kragen (Abstand B), die zusammen eine obere Fuge F_{O} bilden, unterhalb das Deckelteil 10 gelangt, an den Kragen bis zu der Abtropfkante 12 läuft und sich dort von dem Abtropfelement 19 löst.

Figur 1 zeigt die übliche Anordnung des Klappenmoduls 1 an einem Kraftfahrzeug, wobei die Abtropfkante 12 dem oberen Abschnitt des Deckelteils 10 zugeordnet ist, so dass Flüssigkeit von oben durch den ersten Spalt und den zweiten Spalt (obere Fuge F_{O}) bis zu der Abtropfkante 12 gelangt und sich dort von dieser löst und senkrecht beziehungsweise vertikal nach unten tropft. Das Trageteil 9 ist derart ausgebildet, dass es an seinem der Abtropfkante 12 zugewandten Ende derart ausgebildet ist, dass von der Abtropfkante 12 gelöst Flüssigkeit auf die dem Deckelteil 10 zugewandte Seite des Trageteils 9 tropft. Pfeile in den Figuren deuten den Verlauf der Flüssigkeit entsprechend an.

Das Trageteil 9 bildet zusammen mit dem Deckelteil 10 einen Kanal 14, durch welchen die abgetropfte Flüssigkeit zwischen Trageteil 9 und Deckelteil 10 nach unten in Richtung einer unteren Fuge F_{U} fließt. An dem der unteren Fuge zugewandten Ende weist das Trageteil 9 einen Führungsabschnitt 15 auf, der den Kanal 14 verengt und die Flüssigkeit in Richtung des Deckelteils 10 führt. Zwischen Deckelteil 10 und Führungsabschnitt 15 verbleibt jedoch ein Schlitz, durch welchen die Flüssigkeit nach unten in die untere Fuge F_{U} tropft. Zweckmäßigerweise weist das Führungselement 15 eine weitere Abtropfkante auf, an welcher ein sicheres Lösen der Flüssigkeit von dem Trageteil 9 gewährleistet wird.

Figur 3 zeigt hierzu eine vergrößerte Detailansicht des Klappenmoduls 1 im Bereich der unteren Fuge F_{U} gemäß Kreis K2 aus Figur 1. Die Flüssigkeit, die von dem Führungselement 15 in Richtung der Fuge F_{U} geführt wurde, tropft von dem Führungselement 15 ab, trifft auf den Kragen 8 und läuft dann durch die untere Fuge F_{U} aus dem Klappenmodul 1 wieder heraus.

Insgesamt wird dadurch gewährleistet, dass Flüssigkeit, die beispielsweise über das Karosserieaußenblech zu dem Tankklappenmodul 1 gelangt, sicher durch dieses hindurch geleitet wird, ohne dass sie zu dem Betriebsmittelanschluss 6 gelangen kann. Insbesondere die Abtropfkante 12 gewährleistet, dass die Flüssigkeit sich von dem Muldenkörper 3 löst und nicht in das Innere des Muldenkörpers 3 in Richtung des Betriebsmittelanschlusses 6 läuft. Das der Abtropfkante 12 zugewandte Ende beziehungsweise der der Abtropfkante 12 zugeordnete Rand des Trageteils 9 bildet dabei einen Auffangabschnitt, an welchem die abgetropfte Flüssigkeit aufgefangen und dem Kanal 14 zugeführt wird. Während gemäß dem vorliegenden Ausführungsbeispiel vorgesehen ist, dass der Kanal 14 von dem Deckelteil 10 und dem Trageteil 9 zusammen gebildet wird, ist gemäß einem alternativen und hier nicht dargestellten Ausführungsbeispiel vorgesehen, dass der Kanal 14 allein durch das Trageteil 9 unabhängig von dem Deckelteil 10 gebildet wird.

Wie in Figur 2 ersichtlich, ist das Abtropfelement 13 bevorzugt mit einer Abtropfrinne 16 versehen, in welcher die Flüssigkeit zunächst gesammelt werden kann, um beispielsweise eine notwendige Schwere zum Abreißen an der Abtropfkante 12 zu gewährleisten. Auch kann über die Abtropfrinne 16 Flüssigkeit über den Kragen 8 des Muldenkörpers 3 seitlich an dem Betriebsmittelanschluss 6 vorbeigeführt werden.

Figur 4 zeigt eine optionale Weiterbildung des Tankklappenmoduls 1. Sollte doch Flüssigkeit in das Innere des Muldenkörpers 3 gelangen, so ist sicherzustellen, dass die Flüssigkeit auch wieder abgeführt werden kann. Hierzu ist vorgesehen, im unteren Bereich des Muldenkörpers 3 eine Ablauföffnung 17 auszubilden, durch welche in den Muldenkörper 3 gelangte Flüssigkeit nach außen, insbesondere in Richtung eines Radkastens des Kraftahrzeugs ablaufen kann.

Um zu vermeiden, dass durch einen Unterdruck in dem Tankklappenmodul 1 Schmutzpartikel und/oder Flüssigkeit aus Richtung des Radkastens in den Muldenkörper 3 hineintransportiert werden, ist der Ablauföffnung 17 eine selbsttätige Ventileinrichtung 18 zugeordnet, die vorliegend als Flatterventil ausgebildet ist. Dazu weist die Ventileinrichtung 18 ein elastisch verformbares Ventilelement 19 auf, das sich über den Querschnitt der Ablauföffnung 17 erstreckt. Einendig ist das Ventilelement 19 fest mit einem Abschnitt des die Ablauföffnung 17 bildenden Muldenkörpers 3 verbunden, während das Ventilelement 19 anderendig im Wesentlichen frei beweglich ist. Das freie Ende 20 des Ventilkörpers 19 ist dabei einem Anschlag 21 zugeordnet, so dass das Ventilelement 19 mit dem freien Ende 20 bis zu dem Anschlag 21 in die eine Richtung verlagerbar ist, und in die andere Richtung frei verformbar ist. Dabei ist die Ventileinrichtung 18 derart ausgebildet, dass bei einem Unterdruck in dem Klappenmodul 1 das Ventilelement 19 mit dem freien Ende 20 gegen den Anschlag 21 bewegt wird, so dass die Ablauföffnung 17 verschlossen ist. Ändern sich die Druckverhältnisse, so löst sich das Ventilelement 19 von dem Anschlag 21 und gibt die Ablauföffnung zumindest bereichsweise frei, so dass Flüssigkeit aus dem Muldenkörper 3 entweichen kann.

Insgesamt wird somit ein Tankklappenmodul 1 geboten, das auf einfache und kostengünstige Art und Weise eine Verunreinigung von Kraftstoff und/oder eine Gefährdung eines elektrischen Tankanschlusses verhindert.

Figur 5 zeigt in einer Seitenansicht das bereits erwähnte Kraftfahrzeug 22. Das Kraftfahrzeug 22 weist auf der in Figur 5 dargestellten Längsseite den zuvor beschriebenen Betriebsmittelanschluss 6 auf, der in dem Tankklappenmodul 1 angeordnet ist. Das Tankklappenmodul 1 ist dabei in einer Öffnung 23 des zuvor erwähnten Karosserieblechs 2 der Karosserie des Kraftfahrzeugs 22 angeordnet, so dass der Betriebsmittelanschluss 6 durch das Deckelteil 10 verdeckt ist. Vorliegend ist der Betriebsmittelanschluss 6 zur Aufnahme flüssigen Kraftstoffs ausgebildet, wobei das Kraftfahrzeug 22 dementsprechend eine Brennkraftmaschine als Antriebseinrichtung aufweist. Alternativ oder zusätzlich kann das Kraftfahrzeug 22 wenigstens eine elektrische Maschine aufweisen, wobei dann der Betriebsmittelanschluss 6 zweckmäßigerweise als elektrischer Anschluss ausgebildet ist oder einen solchen aufweist. Handelt es sich bei dem Kraftfahrzeug 22 um ein Fahrzeug mit einer Hybridantriebsvorrichtung, die sowohl eine Brennkraftmaschine als auch eine elektrische Maschine umfasst, so weist der Betriebsmittelanschluss 6 vorzugsweise sowohl einen Tankanschluss für flüssigen oder gasförmigen Kraftstoff als auch einen elektrischen Anschluss auf, die beide in dem Muldenkörper 3 des Klappenmoduls beziehungsweise des Tankklappenmoduls 1 angeordnet sind. Durch die zuvor beschriebene Ausbildung des Tankklappenmoduls 1 ergeben sich hierdurch die bereits genannten Vorteile für den Betriebsmittelanschluss 6.

Alternativ zu der in Figur 5 dargestellten Anordnung des Tankklappenmoduls 1 an einer Längsseite des Kraftfahrzeugs 22 ist es gemäß einem alternativen Ausführungsbeispiel vorgesehen, dass das Tankklappenmodul 1 mit dem dazugehörigen Betriebsmittelanschluss 6 an einer Front oder Heckseite des Kraftfahrzeugs 22 angeordnet ist, wie durch Pfeile 24 angedeutet.

## Patentansprüche

1. Klappenmodul (1) für ein Kraftfahrzeug (22), mit einem in eine Karosserie des Kraftfahrzeugs (22) einsetzbaren wannenförmigen Muldenkörper, dem ein Betriebsmittelanschluss (6) zugeordnet oder zuordenbar ist, und mit einer verschwenkbar gelagerten Klappe (4) zum Verschließen und Freigeben des Muldenkörpers (3), wobei die Klappe (4) zumindest zweiteilig ausgebildet ist, mit einem Deckelteil (10) und einem Trageteil (9), wobei im geschlossenen Zustand das Trageteil (9) innerhalb des Muldenkörpers (3) liegt und zwischen Deckelteil und Muldenkörper zumindest eine obere Fuge (F_{O}) und eine untere Fuge (F_{U}) gebildet sind, wobei der Muldenkörper (3) an seiner dem Deckelteil (10) zugewandten Stirnseite wenigstens abschnittsweise eine Abtropfkante (12) aufweist, die im verschlossenen Zustand der oberen Fuge (F_{O}) zugeordnet ist und oberhalb des Trageteils (9) liegt, und wobei das Trageteil (9) mindestens einen Kanal (14) bildet, der von der Abtropfkante (12) gelöste Flüssigkeit zu der unteren Fuge (F_{U}) leitet, **dadurch gekennzeichnet, dass** an dem der unteren Fuge (F_{U}) zugeordneten Ende des Kanals (14) eine weitere Abtropfkante angeordnet ist, die die durch den Kanal (14) geführte Flüssigkeit von dem Trageteil (9) löst und der unteren Fuge zuführt, aus welcher die Flüssigkeit wieder nach außen austreten kann.

2. Klappenmodul nach Anspruch 1, **dadurch gekennzeichnet, dass** die Abtropfkante (12) aus Kunststoff, insbesondere aus einem thermoplastischen Elastomer gefertigt ist.

3. Klappenmodul nach einem der vorhergehenden Ansprüche, **dadurch gekennzeichnet, dass** die Abtropfkante (12) an dem Muldenkörper (3) angespritzt ist.

4. Klappenmodul nach einem der vorhergehenden Ansprüche, **dadurch gekennzeichnet, dass** der Muldenkörper (12) zumindest abschnittsweise einen Kragen (8) aufweist, der von dem Deckelteil (10) der Klappe (4) im geschlossenen Zustand überdeckt wird und die Abtropfkante (12) aufweist.

5. Klappenmodul nach einem der vorhergehenden Ansprüche, **dadurch gekennzeichnet, dass** der Kanal (14) zwischen Trageteil (9) und Deckelteil (10) gebildet ist.

6. Klappenmodul nach einem der vorhergehenden Ansprüche, **dadurch gekennzeichnet, dass** der Kanal (14) vollständig durch das Trageteil (9) gebildet ist.

7. Klappenmodul nach einem der vorhergehenden Ansprüche, **dadurch gekennzeichnet, dass** der Muldenkörper (3) eine Ablauföffnung (17) aufweist, wobei der Ablauföffnung (17) eine selbsttätige Ventileinrichtung (18) zum Öffnen oder Verschließen der Ablauföffnung (17) zugeordnet ist.

8. Klappenmodul nach Anspruch 7, **dadurch gekennzeichnet, dass** die Ventileinrichtung (18) als Flatterventil ausgebildet ist.

9. Kraftfahrzeug (22) mit einem Klappenmodul nach einem der Ansprüche 1 bis 8.

## Claims

1. Flap module (1) for a motor vehicle (22), with a tub-shaped trough body which is insertable into a body of the motor vehicle (22) and which is assigned or can be assigned an operating medium connection (6), and with a pivotably mounted flap (4) for closing and opening up the trough body (3), wherein the flap (4) is formed in at least two parts, with a cover part (10) and a carrying part (9), wherein, in the closed state, the carrying part (9) lies within the trough body (3) and at least one upper joint (F_{O}) and a lower joint (F_{U}) are formed between cover part and trough body, wherein the end side of the trough body (3) facing the cover part (10) has, at least in sections, a drip edge (12) which, in the closed state, is assigned to the upper joint (F_{O}) and lies above the carrying part (9), and wherein the carrying part (9) forms at least one channel (14) which conducts liquid released by the drip edge (12) to the lower joint (F_{U}), **characterized in that** a further drip edge is arranged at that end of the channel (14) which is assigned to the lower joint (F_{U}), said drip edge releasing liquid guided through the channel (14) from the carrying part (9) and supplying same to the lower joint, from which the liquid can emerge again to the outside.

2. Flap module according to Claim 1, **characterized in that** the drip edge (12) is manufactured from plastic, in particular from a thermoplastic elastomer.

3. Flap module according to either of the preceding claims, **characterized in that** the drip edge (12) is injection moulded on the trough body (3).

4. Flap module according to one of the preceding claims, **characterized in that** the trough body (12) has, at least in sections, a collar (8) which is overlapped by the cover part (10) of the flap (4) in the closed state and has the drip edge (12).

5. Flap module according to one of the preceding claims, **characterized in that** the channel (14) is formed between carrying part (9) and cover part (10) .

6. Flap module according to one of the preceding claims, **characterized in that** the channel (14) is completely formed by the carrying part (9).

7. Flap module according to one of the preceding claims, **characterized in that** the trough body (3) has a drain opening (17), wherein the drain opening (17) is assigned an automatic valve device (18) for opening or closing the drain opening (17) .

8. Flap module according to Claim 7, **characterized in that** the valve device (18) is designed as a flutter valve.

9. Motor vehicle (22) with a flap module according to one of Claims 1 to 8.

## Revendications

1. Module de volet (1) pour un véhicule automobile (22), comprenant un corps en creux en forme de cuvette pouvant être inséré dans une carrosserie du véhicule automobile (22), auquel est associé ou peut être associé un raccord de fluide de travail (6), comprenant un volet (4) supporté de manière pivotante pour fermer et ouvrir le corps en creux (3), le volet (4) étant réalisé au moins en deux parties, avec une partie de couvercle (10) et une partie de support (9), et dans l'état fermé, la partie de support (9) étant située à l'intérieur du corps en creux (3) et entre la partie de couvercle et le corps en creux étant formé au moins un joint supérieur (F_{O}) et un joint inférieur (F_{U}), le corps en creux (3) présentant, au niveau de son côté frontal tourné vers la partie de couvercle (10), au moins en partie, une arête d'égouttage (12) qui, dans l'état fermé, est associée au joint supérieur (F_{O}), et est située au-dessus de la partie de support (9), et la partie de support (9) formant au moins un canal (14) qui conduit le fluide gouttant de l'arête d'égouttage (12) jusqu'au joint inférieur (F_{U}), **caractérisé en ce qu'**à l'extrémité du canal (14) associé au joint inférieur (F_{U}) est disposée une arête d'égouttage supplémentaire qui laisse s'égoutter de la partie de support (9) le liquide guidé à travers le canal (14) et l'achemine au joint inférieur, à partir duquel le liquide peut à nouveau sortir vers l'extérieur.

2. Module de volet selon la revendication 1, **caractérisé en ce que** l'arête d'égouttage (12) est fabriquée en plastique, en particulier en un élastomère thermoplastique.

3. Module de volet selon l'une quelconque des revendications précédentes, **caractérisé en ce que** l'arête d'égouttage (12) est surmoulée sur le corps en creux (3).

4. Module de volet selon l'une quelconque des revendications précédentes, **caractérisé en ce que** le corps en creux (12) présente au moins en partie un rebord (8) qui est recouvert par la partie de couvercle (10) du volet (4) dans l'état fermé et qui présente l'arête d'égouttage (12).

5. Module de volet selon l'une quelconque des revendications précédentes, **caractérisé en ce que** le canal (14) est formé entre la partie de support (9) et la partie de couvercle (10).

6. Module de volet selon l'une quelconque des revendications précédentes, **caractérisé en ce que** le canal (14) est formé complètement par la partie de support (9).

7. Module de volet selon l'une quelconque des revendications précédentes, **caractérisé en ce que** le corps en creux (3) présente une ouverture d'écoulement (17), un dispositif de soupape automatique (18) pour ouvrir ou fermer l'ouverture d'écoulement (17) étant associé à l'ouverture d'écoulement (17).

8. Module de volet selon la revendication 7, **caractérisé en ce que** le dispositif de soupape (18) est réalisé sous forme de clapet battant.

9. Véhicule automobile (22) comprenant un module de volet selon l'une quelconque des revendications 1 à 8.
